# EUROPÄISCHE PATENTSCHRIFT

(11) **EP 1 385 764 B1**
(45) Veröffentlichungstag und Bekanntmachung des Hinweises auf die Patenterteilung: **11.04.2007**
(21) Anmeldenummer: 02730188.6
(22) Anmeldetag: 22.04.2002
(51) Int. Cl.: B65G 67/20

(54) **VORRICHTUNG ZUM BELADEN UND/ODER ENTLADEN EINES TRANSPORTLADERAUMS**
DEVICE FOR LOADING AND/OR UNLOADING A FREIGHT TRANSPORT COMPARTMENT
DISPOSITIF DE CHARGEMENT ET/OU DECHARGEMENT D'UN CONTENEUR DE TRANSPORT

(30) Priorität: 26.04.2001 DE 10120575; 20.06.2001 DE 10129571
(43) Veröffentlichungstag der Anmeldung: 04.02.2004
(73) Patentinhaber: BSH Bosch und Siemens Hausgeräte GmbH, 81739 München (DE)
(72) Erfinder: ROHR, Christoph, 89522 Heidenheim (DE)
(86) Internationale Anmeldenummer: PCT/EP2002/004412
(87) Internationale Veröffentlichungsnummer: WO 2002/088009

(56) Entgegenhaltungen:
- DE-A- 3 608 206
- FR-A- 2 768 709
- GB-A- 506 236
- US-A- 3 952 887
- US-A- 5 054 987

## Beschreibung

Die Erfindung geht aus von einer Vorrichtung zum Beladen und/oder Entladen eines Transportladeraums nach dem Oberbegriff des Anspruchs 1.

Es sind gattungsgemäße Vorrichtungen zum Beladen und Entladen von Transportladeräumen von Nutzkraftfahrzeugen mit Förderbändern bekannt. Die Vorrichtungen besitzen ein erstes, in einem Ladebereich installiertes Förderband und ein zweites, im Transportladeraum installiertes Förderband. Zum Beladen eines Transportladeraums werden mehrere, zu transportierende Wareneinheiten auf das im Ladebereich installierte Förderband gestellt. Anschließend werden die Förderbänder im Ladebereich und im Transportladeraum synchron angetrieben und die Wareneinheiten in den Transportladeraum gefördert.

Ferner ist bekannt, mit Hubwagen einen Transportladeraum sequentiell jeweils mit einzelnen oder wenigen Wareneinheiten zu beladen. Hierbei nimmt der Hubwagen eine Wareneinheit aus einer Warenbereitstellung auf, fährt mit der Wareneinheit vorwärts in den Transportladeraum, stellt die Wareneinheit ab, fährt rückwärts aus dem Transportladeraum heraus und nimmt eine weitere Wareneinheit zum Transport in den Transportladeraum auf, und zwar so oft, bis der Transportladeraum in gewünschter Weise beladen ist.

Aus der US-A-50 54 987 ist eine Vorrichtung zum Laden oder Entladen eines Laderaumes, wie beispielsweise das Innere eines Güteranhängers, bekannt. Eine Transportvorrichtung ist horizontal verschieblich auf einer normalen Oberfläche einer gewöhnlichen Lade/Entladerampe angeordnet. Beim Beladevorgang sind Gütereinheiten auf der Transportvorrichtung angeordnet. Durch Einschalten einer Kraftquelle wird die Transportvorrichtung in den Laderaum eines Anhängers gefahren. Wenn die Güter vollständig im Inneren des Anhängers sind, werden Güterrückhaltemittel aktiviert, die die Güter im Anhänger halten, wobei die Kraftquelle in ihrer Drehrichtung umgedreht wird und dadurch die Transporteinheit zurückgefahren wird. Die Güter gleiten bzw. rutschen somit von der Transporteinheit auf dem Boden des Anhängers. Das Beladen der Transportvorrichtung erfolgt von Hand, mit Gabelstaplern, einem Kran oder einer Fördereinheit.

Aus der US-A-39 52 987 ist eine weitere Lade- und Entladevorrichtung bekannt, die aus einer Basisvorrichtung besteht, die an einer Laderampe befestigt ist, und einer ausfahrbaren Einrichtung, welche sich auf einer Basisvorrichtung bewegt. Auf der Oberseite der ausfahrbaren Einrichtung sind Rollen angebracht, auf denen das Gut aufliegt. Mit Hilfe einer Antriebseinrichtung wird die ausfahrbare Einrichtung in ein Fahrzeug eingeführt. Nach dem Einführen der ausfahrbaren Einrichtung mit den Ladegütern wird ein Laderückhalter verschwenkt, so dass dieser beim Herausziehen der ausfahrbaren Einrichtung aus dem Fahrzeug die Güter zurückhält. Zum Entladen wird dieser Vorgang umgekehrt. Die an der Oberseite der ausfahrbaren Einrichtung angeordneten Rollen werden nicht angetrieben.

Aus der GB-A-506 236 ist eine Vorrichtung zum Be- und Entladen von Gütern bekannt. Ein Be- und Entladebalken verfügt über ein Förderband zwischen zwei Endrollen. Zum Aufnehmen von Gütern auf den Be- und Entladebalken sind die Güter auf einem Teppich oder einem anderen flexiblen Material positioniert. Zum Beladen des Be- und Entladebalkens wird das Förderband entsprechend bewegt und mit Hilfe eines Förderwagens der Be- und Entladebalken in Richtung der Güter geschoben. Der Förderwagen bewegt sich auf einem Rahmen. Zum Entladen wird der Be- und Entladebalken mit dem anderen Ende auf ein Fahrzeug bewegt und durch eine entsprechende Bewegung des Förderbandes die Güter auf dem Fahrzeug abgelegt.

Schließlich ist aus der DE-A-36 08 206 eine Vorrichtung zum Beladen von Containern mit Paletten bekannt. Eine Verfahreinheit besteht aus einem Trägerrahmen, dem eine Antriebseinheit und eine Steuereinheit für beispielsweise als Gliederkette ausgebildetes Palettentransportelement zugeordnet ist. Bodenseitig weist der Trägerrahmen Rollen und/oder Räder auf. Die Rollen und/oder Räder an der Verfahreinheit dienen dazu, die Verfahreinheit horizontal zu bewegen.

Die Aufgabe der Erfindung besteht insbesondere darin, eine kostengünstige, flexibel einsetzbare und effiziente gattungsgemäße Vorrichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Vorrichtung zum Beladen und/oder Entladen eines Transportladeraums, insbesondere eines Nutzkraftfahrzeugs, mit wenigstens einer in einem Ladebereich installierten Fördereinheit, über die insbesondere mehrere Wareneinheiten gleichzeitig förderbar sind.

Es wird vorgeschlagen, daß die Fördereinheit zumindest ein in den Transportladeraum einführbares, eine Stellfläche für die Wareneinheiten bildendes Mittel aufweist. Der Transportladeraum kann in wenigen, vorzugsweise in einem Arbeitsgang in kurzer Zeit mit einer großen Anzahl an Wareneinheiten vollständig beladen und/oder entladen werden. Wartezeiten an Ladebereichen können reduziert und der Nutzungsgrad von Nutzkraftfahrzeugen kann erhöht und insbesondere können kostenintensive Umrüstarbeiten von Transportladeräumen mit zusätzlichen Sondervorrichtungen vermieden werden. Ferner kann ein vorteilhaftes Beladen und/oder Entladen zahlreich verschiedener Standardtransportladeräume und dadurch ein besonders flexibler Einsatz erreicht werden. Die erfindungsgemäße Vorrichtung kann bei verschiedenen, dem Fachmann als sinnvoll erscheinenden Anwendungsgebieten eingesetzt werden, wie beispielsweise beim Be- und Entladen von Bahncontainern, Schiffscontainern usw., jedoch insbesondere beim Be- und Entladen von Nutzkraftfahrzeug-Transportladeräumen, die häufig nur ihrer Längsrichtung nach beladen werden können.

Das Mittel kann verschiedene, dem Fachmann als sinnvoll erscheinende Bauformen aufweisen, beispielsweise kann das Mittel von einer verfahrbaren Trägerplatte, von verfahrbaren Plattensegmenten bzw. Lamellen und/oder von Schienen usw. gebildet sein. Ist das Mittel im Ladebereich zumindest teilweise und vorteilhaft vollständig versenkbar, kann auf dieses beim Abstellen von Wareneinheiten vorteilhaft aufgefahren werden, beispielsweise mit Hubwagen.

In einer weiteren Ausgestaltung der Erfindung wird vorgeschlagen, daß am Mittel Stützrollen gelagert sind, über die das Mittel insbesondere im Transportladeraum abstützbar ist. Auf das Mittel wirkende große Momente aufgrund langer Hebelarme können vermieden und es kann eine kostengünstige Konstruktion, insbesondere Lagerung des Mittels erreicht werden.

Die Wareneinheiten können vom in den Transportladeraum eingeführten Mittel geschoben oder auch gehoben werden. Besonders vorteilhaft besitzt jedoch das Mittel wenigstens ein über eine Antriebseinheit antreibbares Fördermittel, beispielsweise ein oder mehrere Förderbänder, über die die Wareneinheiten vom Mittel in den Transportladeraum förderbar sind. Ist das Fördermittel über die Antriebseinheit in Richtung Transportladeraum mit einer höheren Geschwindigkeit antreibbar als das Mittel in die vom Transportladeraum abgewandte Richtung, kann ein lückenloses Beladen des Transportladeraums in Beladerichtung erreicht werden.

Um Bauteile, Bauraum, Montageaufwand und Kosten zu sparen, kann vorteilhaft die Antriebseinheit des Fördermittels einstückig mit einer Antriebseinheit des Mittels ausgeführt sein. Das Fördermittel und das Mittel können dabei über eine Getriebeeinheit in unterschiedliche Richtungen und Geschwindigkeiten angetrieben sein.

Ist das Mittel über eine Hebeeinheit anhebbar, kann das Mittel in einem versenkten Zustand zum Beladen mit Wareneinheiten überfahren und anschließend können die Wareneinheiten von einem angrenzenden Untergrund abgehoben werden, so daß eine besonders schmale Bauform des Mittels erreicht und dennoch Reibung zwischen den Wareneinheiten und einem angrenzenden Untergrund vermieden werden kann. Ferner können insbesondere vorteilhaft quer zur Belade-/Entladerichtung anstatt einer Plattform einzelne beabstandete, insbesondere versenkbare Plattensegmente verwendet werden, die gegenüber einer geschlossenen Plattform mit einem geringen Gewicht und mit einem geringen Materialaufwand hergestellt werden können. Ferner können zur Anpassung an unterschiedliche Randbedingungen, wie insbesondere unterschiedlich breite und/oder bei einer Querbeladung an unterschiedlich lange Transportladeräume unterschiedlich viele Plattensegmente zum Beladen und/oder Entladen benutzt werden.

In einer weiteren Ausgestaltung der Erfindung wird vorgeschlagen, daß die Fördereinheit wenigstens ein Rückhaltemittel aufweist, das bei einer Bewegung des Mittels aus dem Transportladeraum entgegen der Bewegungsrichtung des Mittels vor die Wareneinheiten bewegbar ist. Die Wareneinheiten können beim Herausführen des Mittels aus dem Transportladeraum konstruktiv einfach vom Mittel abgeschoben werden. Sind quer zur Belade-/Entladerichtung zumindest zwei Mittel angeordnet, können vorteilhaft Rückhaltemittel zwischen den Mitteln angeordnet werden. Grundsätzlich ist jedoch auch denkbar, Rückhaltemittel seitlich oder von oben vor die Wareneinheiten zu führen.

Ist das Mittel neben einem Bahngleis angeordnet und im wesentlichen quer zum Bahngleis bewegbar und insbesondere antreibbar ausgeführt, können vorteilhaft bereits auf den Bahngleisen stehende Bahncontainer schnell und effektiv beladen werden.

Besitzt das Mittel neben einem ersten Bewegungsfreiheitsgrad zumindest einen zweiten Bewegungsfreiheitsgrad, kann die Vorrichtung flexibel an eine Position des Transportladeraums und/oder an eine Position der bereitgestellten Wareneinheiten angepaßt werden. Das Mittel kann um eine oder mehrere Achsen schwenkbar und in eine oder mehrere Richtungen translatorisch bewegbar ausgeführt sein. Möglich ist auch, das Mittel schwimmend zu lagern, so daß sich dieses selbsttätig an eine Position des Transportladeraums und/oder an bereitgestellte Wareneinheiten anpassen kann.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte erfindungsgemäße Vorrichtung bei einem Beladevorgang vor dem Einfahren einer Trägerplattform in einen Transportladeraum,
- Fig. 2: die Vorrichtung aus Fig. 1 bei angehobener Trägerplattform,
- Fig. 3: die Vorrichtung aus Fig. 2 bei eingefahrener Trägerplattform,
- Fig. 4: die Vorrichtung aus Fig. 3 beim Entladen der Trägerplattform,
- Fig. 5: einen Ausschnitt der Trägerplattform der Vorrichtung aus den Fig. 1 bis 4,
- Fig. 6: einen Ausschnitt der Trägerplattform aus den Fig. 1 bis 4 mit Wareneinheiten von oben,
- Fig. 7: eine schematische Darstellung einer zu Fig. 1 alternativen Vorrichtung mit Bodenlamellen zum Beladen von Bahncontainern von oben,
- Fig. 8: einen Schnitt entlang der Linie VIII-VIII in Fig. 7 bei eingefahrenen Bodenlamellen und mit Wareneinheiten und
- Fig. 9: die Vorrichtung gemäß Fig. 8 beim Entladen der Bodenlamellen und ausgefahrenen Rückhaltemittel.

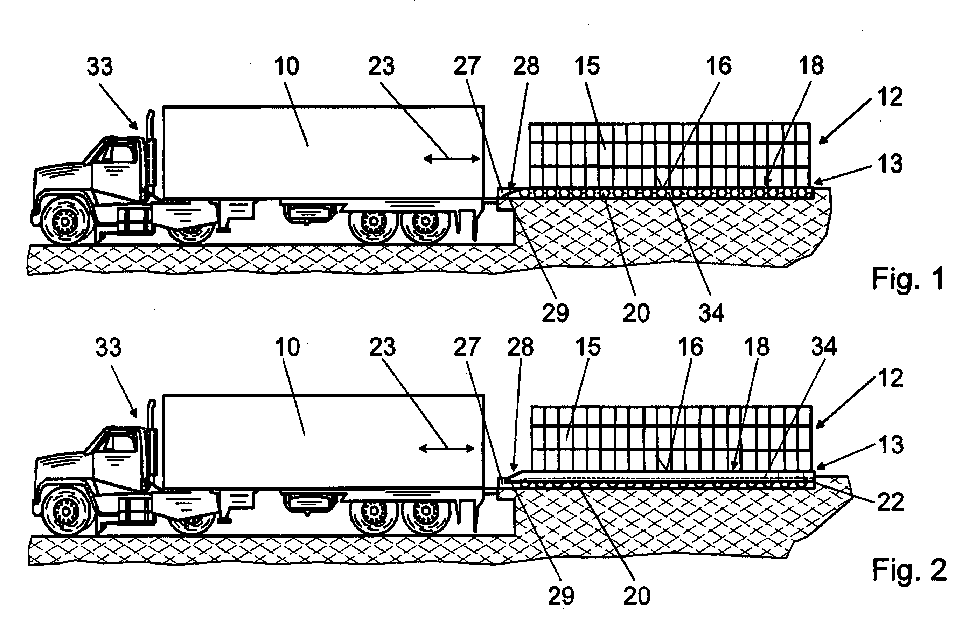

Fig. 1 zeigt eine schematisch dargestellte Vorrichtung zum Beladen und Entladen von Transportladeräumen 10, und zwar von Nutzkraftfahrzeugen 33. Die Vorrichtung besitzt eine in einem Ladebereich 12 installierte Fördereinheit 13, über die mehrere Wareneinheiten 15 gleichzeitig förderbar aus dem Ladebereich in den Transportladeraum 10 sind.

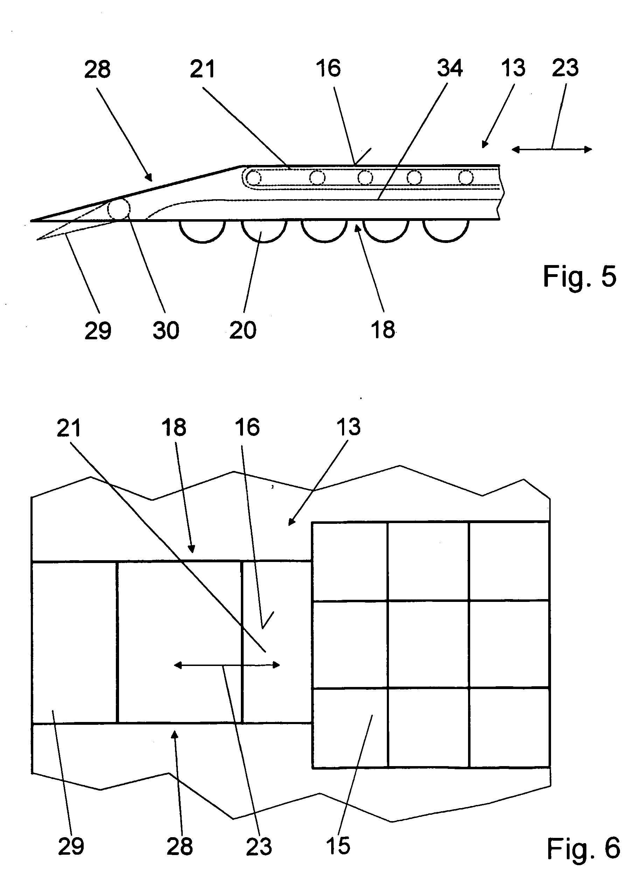

Die Fördereinheit 13 besitzt eine in den Transportladeraum 10 einführbare Trägerplattform 18, die ein integriertes, von einer elektrischen Antriebseinheit 22 antreibbares Förderband 21 aufweist (Fig. 5 und 6), das eine Stellfläche 16 für die Wareneinheiten 15 bildet. Die ca. 2,2 m breite und ca. 12 m lange Trägerplattform 18 ist im Ladebereich 12 in einer Ausnehmung 27 versenkbar und bildet mit einem Boden des Ladebereichs 12 im versenkten Zustand eine Ebene, so daß auf die Trägerplattform 18 beim Abstellen der Wareneinheiten 15 vorteilhaft aufgefahren werden kann.

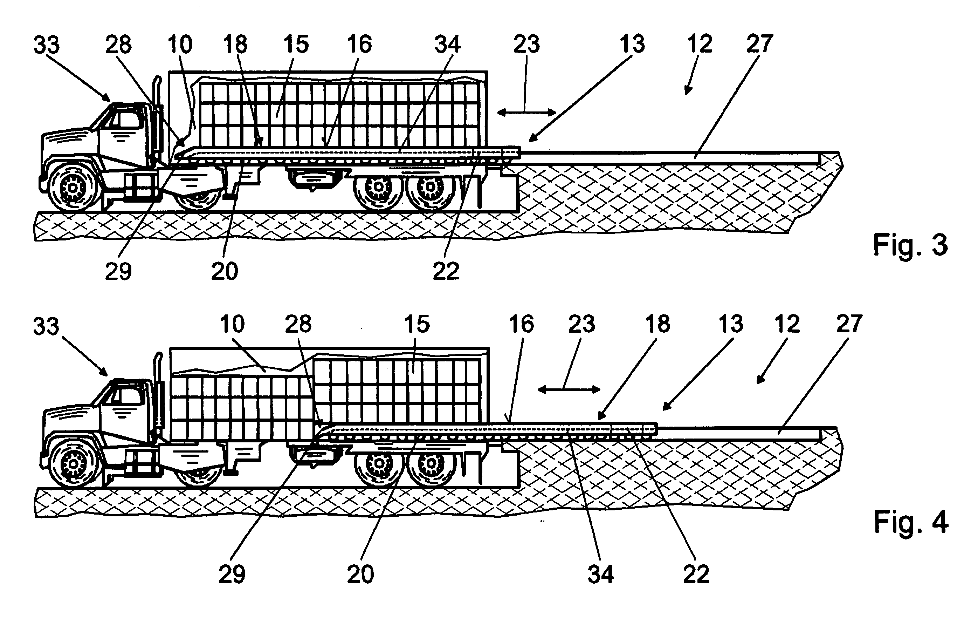

An der Trägerplattform 18 sind an einer integrierten hydraulischen Hebeeinheit 34 Stützrollen 20 gelagert. Anstatt einer in der Trägerplattform 18 integrierten Hebeeinheit 34, könnte auch eine Hebeeinheit im Ladebereich 12 integriert sein. Ist die Trägerplattform 18 mit den Wareneinheiten 15 beladen, wird die Trägerplattform 18 und die darauf abgestellten Wareneinheiten 15 über die Hebeeinheit 34 und die Stützrollen 20 angehoben (Fig. 2). Anschließend wird die Trägerplattform 18, angetrieben durch die elektrische Antriebseinheit 22, über die Stützrollen 20 in den Transportladeraum 10 gefahren (Fig. 3).

Um möglichst einen stufenlosen Übergang zwischen der Trägerplattform 18 und einem Boden des Transportladeraums 10 zu erreichen, wird, nachdem die Trägerplattform 18 in den Transportladeraum 10 eingefahren ist, ein schwenkbar gelagertes Endstück 29 eines keilförmigen Bereichs 28, der ein freies Ende der Trägerplattform 18 bildet, in Richtung Boden des Transportladeraums 10 geschwenkt (Fig. 6). Anschließend wird über die Antriebseinheit 22 das Förderband 21 angetrieben und gleichzeitig die Trägerplattform 18 aus dem Transportladeraum 10 gefahren (Fig. 4 und 5), und zwar wird das Förderband 21 über die Antriebseinheit 22 mit einer minimal höheren Geschwindigkeit in Richtung Transportladeraum 10 angetrieben als die Trägerplattform 18 aus dem Transportladeraum 10. Um die unterschiedlichen Geschwindigkeitsbeträge des Förderbands 21 und der Trägerplattform 18 zu erreichen, sind diese über eine nicht näher dargestellte Getriebeeinheit mit der Antriebseinheit 22 verbunden. Die Wareneinheiten 15 werden mit dem Förderband 21 von der Trägerplattform 18 über den keilförmigen Bereich 28 und das Endstück 29 der Trägerplattform 18 in den Transportladeraum 10 gefördert und dabei aufgrund der unterschiedlichen Geschwindigkeitsbeträge des Förderbands 21 und der Trägerplattform 18 in Längsrichtung des Transportladeraums 10 lückenlos positioniert.

Beim einem nicht näher dargestellten Entladevorgang eines Transportladeraums 10 wird die Trägerplattform 18 in den Transportladeraum 10 mit dem nach unten geschwenkten Endstück 29 unter die Wareneinheiten 15 geschoben, und die Wareneinheiten 15 werden über das Förderband 21 auf die Trägerplattform 18 gezogen.

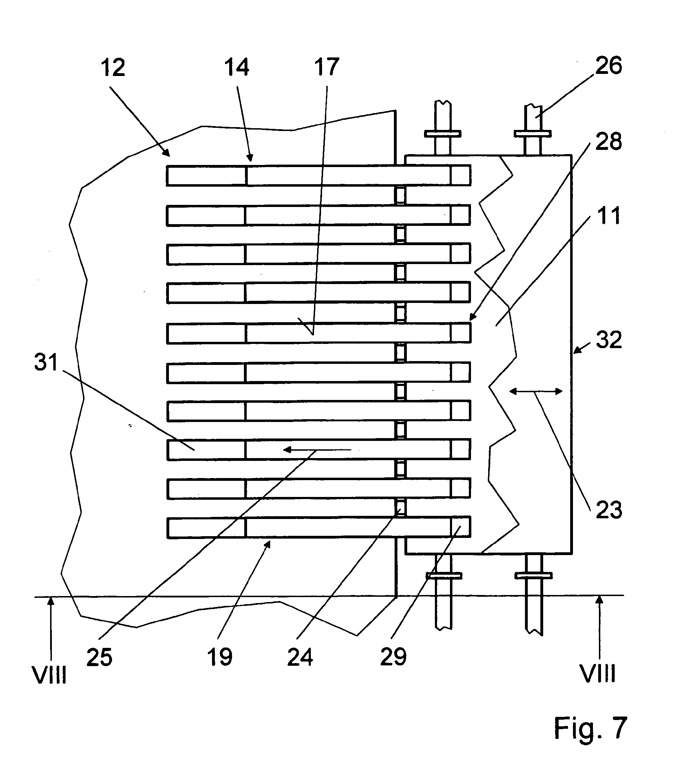

In den Fig. 7 bis 9 ist eine alternative Vorrichtung zum Beladen und Entladen von Transportladeräumen 11 in Bahncontainer 32 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im wesentlichen auf die Unterschiede zum Ausführungsbeispiel in den Fig. 1 bis 6.

Die Vorrichtung besitzt in einem Ladebereich 12 eines Bahnsteigs neben einem Bahngleis 26 quer zur Belade-/Enladerichtung 23 zehn nebeneinander angeordnete Bodenlamellen 19, die quer zum Bahngleis 26 antreibbar gelagert sind und eine Stellfläche 17 für zu transportierende Wareneinheiten 15 bilden. Die einzelnen Bodenlamellen 19 sind in Ausnehmungen 31 im Ladebereich 12 versenkbar und entsprechend der Trägerplattform 18 des Ausführungsbeispiels in den Fig. 1 bis 6 über Stützrollen 20 und über eine Hebeeinheit 34 anhebbar ausgeführt.

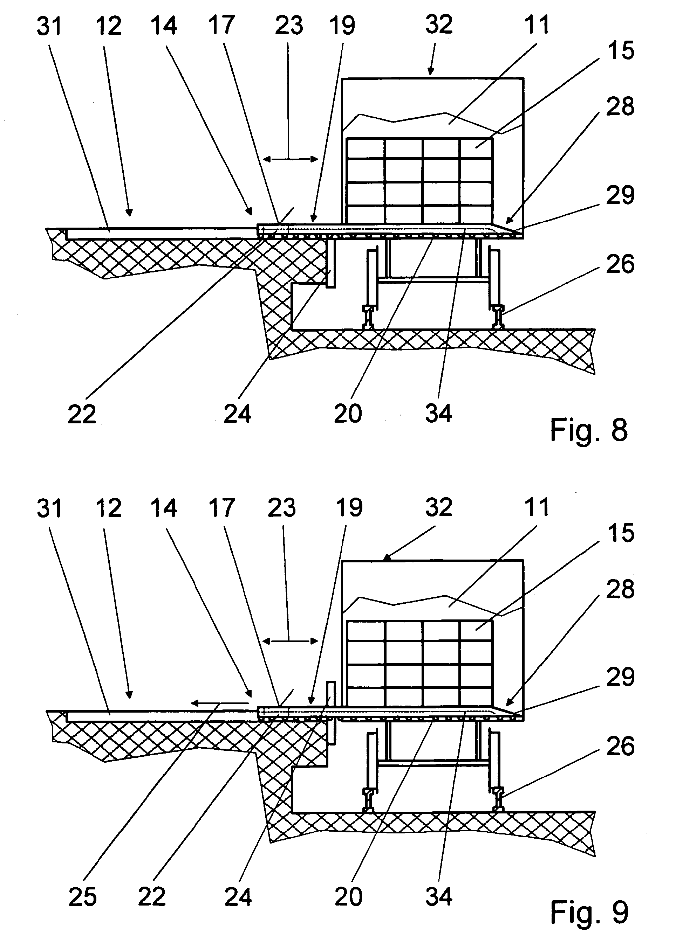

Sind die Bodenlamellen 19 mit Wareneinheiten 15 quer zu den Bahngleisen 26 in den Transportladeraum 11 eingefahren, werden zwischen den Bodenlamellen 19 an einer in Richtung Bahncontainer 32 weisenden Wand des Bahnsteigs angeordnete Rückhaltemittel 24 hydraulisch vertikal nach oben gefahren, so daß diese entgegen einer Bewegungsrichtung 25 der Bodenlamellen 19 aus dem Transportladeraum 11 vor den Wareneinheiten 15 zum Liegen kommen (Fig. 9). Die Bodenlamellen 19 können anschließend aus dem Transportladeraum 11 des Bahncontainers 32 gefahren und die Wareneinheiten 15 können über die Rückhaltemittel 24 von den Bodenlamellen 19 abgestreift und im Transportladeraum 11 positioniert werden. Um beim Abstreifen eine geringe Gleitreibung zwischen den Bodenlamellen 19 und den Wareneinheiten 15 zu erreichen, ist die Stellfläche 17 der Bodenlamellen 19 entsprechend behandelt, und zwar ist diese mit einem speziellen, eine Gleitschicht bildenden Kunststoff beschichtet. Anstatt einer Gleitschicht können grundsätzlich auch Wälzkörper verwendet werden.

### Bezugszeichen

- 10: Transportladeraum
- 11: Transportladeraum
- 12: Ladebereich
- 13: Fördereinheit
- 14: Fördereinheit
- 15: Wareneinheit
- 16: Stellfläche
- 17: Stellfläche
- 18: Mittel
- 19: Mittel
- 20: Stützrolle
- 21: Fördermittel
- 22: Antriebseinheit
- 23: Belade-/Entladerichtung
- 24: Rückhaltemittel
- 25: Bewegungsrichtung
- 26: Bahngleis
- 27: Ausnehmung
- 28: Bereich
- 29: Endstück
- 30: Achse
- 31: Ausnehmung
- 32: Bahncontainer
- 33: Nutzkraftfahrzeug
- 34: Hebeeinheit

## Patentansprüche

1. Vorrichtung zum Beladen und/oder Entladen eines Transportladeraums (10, 11), mit wenigstens einer in einem Ladebereich (12) installierten Fördereinheit (13, 14), über die insbesondere mehrere Wareneinheiten (15) gleichzeitig förderbar sind, wobei die Fördereinheit (13, 14) zumindest ein in den Transportladeraum (10, 11) einführbares Mittel (18, 19) aufweist und am Mittel (18) wenigstens ein über eine Antriebseinheit (22) antreibbares Fördermittel (21) angeordnet ist und das Fördermittel (21) eine horizontale Stellfläche (16) für die Wareneinheiten (15) bildet, **dadurch gekennzeichnet, dass** das Mittel (18, 19) in einer entgegengesetzten Richtung durch eine elektrische Antriebseinheit antreibbar ist, insbesondere mittels Stützrollen (20), als das Fördermittel (21), um das Beladen und/oder Entladen der Wareneinheiten zu ermöglichen.

2. Vorrichtung nach Anspruch 1, **dadurch gekennzeichnet, dass** das Mittel (18, 19) im Ladebereich (12) zumindest teilweise versenkt ist.

3. Vorrichtung nach Anspruch 1 oder 2, **dadurch gekennzeichnet, dass** am Mittel (18, 19) Stützrollen (20) gelagert sind, über die das Mittel (18, 19) abstützbar ist.

4. Vorrichtung nach einem der vorhergehenden Ansprüche, **dadurch gekennzeichnet, dass** das Fördermittel (21) über die Antriebseinheit (22) mit einer höheren Geschwindigkeit in Richtung Transportladeraum (10) antreibbar ist als das Mittel (18) in die vom Transportladeraum (10) abgewandte Richtung.

5. Vorrichtung nach einem der vorhergehenden Ansprüche, **dadurch gekennzeichnet, dass** die Antriebseinheit (22) des Fördermittels (21) einstückig mit einer Antriebseinheit des Mittels (18) ausgeführt ist.

6. Vorrichtung nach einem der vorhergehenden Ansprüche, **dadurch gekennzeichnet, dass** das Mittel (18, 19) über eine Hebeeinheit (34) anhebbar ist.

7. Vorrichtung nach einem der vorhergehenden Ansprüche, **dadurch gekennzeichnet, dass** quer zur Belade-/Entladerichtung (23) zumindest zwei Mittel (19) angeordnet sind.

8. Vorrichtung nach einem der vorhergehenden Ansprüche, **dadurch gekennzeichnet, dass** die Fördereinheit (14) wenigstens ein Rückhaltemittel (24) aufweist, dass bei einer Bewegung des Mittels (19) aus dem Transportladeraum (11) entgegen der Bewegungsrichtung (25) des Mittels (19) vor die Wareneinheiten (15) bewegbar ist.

9. Vorrichtung nach einem der vorhergehenden Ansprüche, **dadurch gekennzeichnet, dass** das Mittel (19) neben einem Bahngleis (26) angeordnet und im Wesentlichen quer zum Bahngleis (26) bewegbar gelagert ist.

## Claims

1. Device for loading and/or unloading a transport load compartment (10, 11), with at least one conveyor unit (13, 14), which is installed in a loading area (12) and by way of which, in particular, several freight units (15) can be simultaneously conveyed, wherein the conveyor unit (13, 14) comprises at least one means (18, 19) introducible into the transport load compartment (10, 11) and at least one conveyor means (21) drivable by way of a drive unit (22) is arranged at the means (18) and the conveyor means (21) forms a horizontal deposit surface (16) for the freight units (15), **characterised in that** the means (18, 19) is drivable by an electric drive unit, particularly by means of support rollers (20) in a direction opposite to the conveyor means (21) so as to enable loading and/or unloading of the freight units.

2. Device according to claim 1, **characterised in that** the means (18, 19) is at least partly recessed in the loading area (12).

3. Device according to claim 1 or 2, **characterised in that** support rollers (20), by way of which the means (18, 19) can be supported, are mounted at the means (18, 19).

4. Device according to one of the preceding claims, **characterised in that** the conveyor means (21) is drivable by way of the drive unit (22) at a higher speed in the direction of the transport load compartment (10) than the means (18) in the direction away from the transport load compartment (10).

5. Device according to one of the preceding claims, **characterised in that** the drive unit (22) of the conveyor means (21) is constructed integrally with a drive unit of the means (18).

6. Device according to one of the preceding claims, **characterised in that** the means (18, 19) is raisable by way of a lifting unit (34).

7. Device according to one of the preceding claims, **characterised in that** at least two means (19) are arranged transversely to the loading/unloading direction (23).

8. Device according to one of the preceding claims, **characterised in that** the conveyor unit (14) comprises at least one retaining means (24) movable in front of the freight units (15), when the means (19) is moved out of the transport load compartment (11), against the movement direction (25) of the means (19).

9. Device according to one of the preceding claims, **characterised in that** the means (19) is arranged near a rail track (26) and mounted to be movable substantially transversely to the rail track (26).

## Revendications

1. Dispositif de chargement et/ou déchargement d'un compartiment à marchandises (10, 11), comprenant au moins une unité de transport (13, 14) installée dans une zone de chargement (12) au moyen de laquelle plusieurs unités de marchandises (15) peuvent être notamment transportées, l'unité de transport (13, 14) comportant au moins un moyen (18, 19) pouvant être introduit dans le compartiment à marchandises (10, 11) et au moins un moyen de transport (21) pouvant être entraîné par unité d'entraînement (22) sur le moyen (18) et le moyen de transport (21) formant une surface de dépose (16) pour les unités de marchandises (15), **caractérisé en ce que** le moyen (18, 19) peut être entraîné par une unité d'entraînement électrique, notamment au moyen de galets de support (20), dans une direction opposée à celle du moyen de transport (21), pour permettre le chargement et/ou le déchargement des unités de marchandises.

2. Dispositif selon la revendication 1, **caractérisé en ce que** le moyen (18, 19) est escamoté au moins en partie dans la zone de chargement (12).

3. Dispositif selon la revendication 1 ou 2, **caractérisé en ce que** des galets de support (20) sont logés sur le moyen (18, 19), sur lesquels le moyen (18, 19) peut s'appuyer.

4. Dispositif selon l'une des revendications précédentes, **caractérisé en ce que** le moyen de transport (21) peut être entraîné par l'unité d'entraînement (22) en direction du compartiment à marchandises (10) à une vitesse supérieure à celle du moyen (18) dans la direction opposée au compartiment à marchandises (10).

5. Dispositif selon l'une des revendications précédentes, **caractérisé en ce que** l'unité d'entraînement (22) du moyen de transport (21) est conçue de manière monobloc avec une unité d'entraînement du moyen (18).

6. Dispositif selon l'une des revendications précédentes, **caractérisé en ce que** le moyen (18, 19) peut être soulevé par une unité de levage (34).

7. Dispositif selon l'une des revendications précédentes, **caractérisé en ce que** au moins deux moyens (19) sont disposés transversalement au sens de chargement/déchargement (23).

8. Dispositif selon l'une des revendications précédentes, **caractérisé en ce que** l'unité de transport (14) comporte au moins un moyen de retenue (24), qui, en cas de déplacement du moyen (19) du compartiment à marchandises (11) dans le sens de déplacement inverse (25) du moyen (19), peut être déplacé devant les unités de marchandises (15).

9. Dispositif selon l'une des revendications précédentes, **caractérisé en ce que** le moyen (19) est disposé près d'une voie ferroviaire (26) et est logé de manière mobile de manière sensiblement transversale à la voie ferroviaire (26).
